# EUROPÄISCHE PATENTSCHRIFT

(11) **EP 1 416 124 B1**
(45) Veröffentlichungstag und Bekanntmachung des Hinweises auf die Patenterteilung: **23.01.2013**
(21) Anmeldenummer: 02024399.4
(22) Anmeldetag: 04.11.2002
(51) Int. Cl.: F16J 15/40, F01D 21/00, F01D 25/18, F16J 15/44

(54) **Dichtungssystem sowie Verfahren zum Betrieb eines Dichtungs-systems**
Sealing system and method to operate a sealing system
Système d'étanchéité et son procédé de fonctionnement

(43) Veröffentlichungstag der Anmeldung: 06.05.2004
(73) Patentinhaber: SIEMENS AKTIENGESELLSCHAFT, 80333 München (DE)
(72) Erfinder: Klaar, Juergen, 47506 Neukrichen-Vluyn (DE)

(56) Entgegenhaltungen:
- EP-A- 1 103 746
- DE-A- 1 463 824
- DE-A- 10 039 204

## Beschreibung

Die Erfindung betrifft ein Dichtungssystem für wasserstoffgekühlte Turbogeneratoren sowie ein Verfahren zum Betrieb eines solchen Dichtungssystems. DE 1 463 824 offenbart ein Dichtungssystem für wasserstoffgekühlte Turbogeneratoren nach dem oberbegriff vom Anspruch 1.

Wasserstoffgekühlte Turbogeneratoren benötigen zur Abdichtung zwischen rotierender Läuferwelle und Ständergehäuse ein ölgeschmiertes Dichtungssystem, welches das Austreten von Wasserstoff aus dem Gehäuse verhindert. Die Anforderungen an derartige Wellendichtungen steigen infolge der Leistungssteigerung der schnell laufenden Turbogeneratoren ständig. Den einwandfreien Betrieb der Wellendichtungen erschweren u.a. immer größere Wellendurchmesser, schwerere Dichtringe, längere Läuferwellen und damit verbunden stärkere Wellenbewegungen am Dichtring sowie höhere Gasdrücke in den Maschinengehäusen.

Die genannten Randbedingungen erschweren den einwandfreien Betrieb der Wellendichtungen. Um das Dichtungssystem für den Betrieb optimal einzustellen, reichen die bisher zur Verfügung stehenden Informationen (Ölmengen, Öldrücke und Temperaturen aus der Hilfsanlage der Wellendichtung) nicht mehr aus. Ist das Dichtungssystem nicht optimal eingestellt, dann ist sein Betrieb mit einem hohen Unsicherheitsfaktor behaftet und eine Beschädigung der Dichtringe fast nicht vermeidbar. Daraus können sich hohe Wasserstoffverluste bzw. eine unzureichende Reinheit des Wasserstoffs in der Maschine ergeben. Im Extremfall wird die Dichtfunktion so weit gestört, dass der Generator abgeschaltet werden muss. Darüber hinaus ist es nachteilig, dass Beschädigungen am Dichtring oder am Dichtringhalter erst bei Revisionen erkannt werden.

Der Erfindung liegt die Aufgabe zugrunde, Störungen im Dichtungssystem frühzeitig zu erfassen. Diese Aufgabe wird durch ein Dichtungssystem nach Anspruch 1 bzw. durch ein Verfahren nach Anspruch 10 gelöst.

Das erfindungsgemäße Dichtungssystem weist eine Wellendichtung auf, die die Läuferwelle umschließt. Zwischen dem Dichtring der Wellendichtung und der Welle und/oder zwischen dem Dichtring und einem entsprechenden Dichtringhalter ist ein Dichtmittel, vorzugsweise Öl, eingebracht. Das Dichtungssystem weist ein Messsystem zur Erfassung des elektrischen Widerstandes des Dichtmittels auf.

Der Erfindung liegt die Idee zugrunde, Störungen im Dichtungssystem bereits frühzeitig durch das Überwachen des elektrischen Widerstandes des Dichtmittels zu erfassen. Damit können die verwendeten Dichtmittelmengen und -drücke in der Dichtung bei der Inbetriebsetzung der Anlage so eingestellt werden, dass sich ausreichende und stabile Dichtmittelfilme zwischen Welle und Dichtring bzw. zwischen Dichtring und Dichtringhalter ergeben. Darüber hinaus können Störungen des Dichtungssystems im laufenden Betrieb frühzeitig erkannt werden.

Die durch die Sensoren ermittelten Messwerte können gespeichert und zur Identifizierung zukünftiger Störungen verwendet werden. Darüber hinaus können Folgeschäden am Dichtungssystem, beispielsweise durch den rechtzeitigen Austausch defekter Teile, verhindert werden können.

Werden entsprechende Überwachungseinrichtungen in alle Dichtmittelfilm-Messkreise integriert, so können mit Hilfe der sich daraus ergebenden Informationen über die Güte der Dichtmittel-Isolierungen sämtliche Dichtmittel-Parameter eingestellt werden. Dies ist insbesondere beim Stillstand der Maschine möglich. Bei einer Doppelfluss-Wellendichtung können erfindungsgemäß die radialen Dichtmittelfilme und die axialen Dichtmittelfilme in Richtung Wasserstoff (Maschine) und Luft (Lager) einzeln bewertet werden.

Beim Turnen und Anfahren der Maschine kann das Schwimmen der Dichtringe bzw. das Anstreifen oder das permanente Anliegen registriert werden. Vorübergehendes Anstreifen, z.B. beim Durchfahren von Resonanzen des Wellenstranges, die zu Störungen im Dichtmittelfilm führen können, werden erfasst. Die Ereignisse können gezählt und gegebenenfalls für Revisionsmaßnahmen verwendet werden. Einflüsse unterschiedlicher Öltemperaturen, die sich auf das Dichtringverhalten auswirken können, werden zur Einleitung von Gegenmaßnahmen frühzeitig erkannt. Magnetische Einwirkungen auf das Dichtungssystem, z.B. durch die Ständerwicklung, können beobachtet werden. Durch Auswertung der Dichtmittelfilm-Messwerte in Verbindung mit der Darstellung von Trends auf Störungen im Dichtmittelfilm können Veränderungen im Verhalten des Dichtungssystenms über längere Betriebszeiten registriert sowie bewertet werden.

In einer besonders vorteilhaften Ausführungsform der Erfindung ist vorgesehen, auf Grundlage der Messwerte eine Regelung der Dichtmittelzufuhr vorzunehmen. Diese erfolgt dabei vorteilhafterweise gezielt an den Stellen des Dichtungssystems, an denen der Dichtmittelfilm eine kritische Stärke unterschreitet.

Die Erfindung sowie weitere vorteilhafte Ausgestaltungen der Erfindung gemäß Merkmalen der Unteransprüche werden im folgenden anhand schematisch dargestellter Ausführungsbeispiele näher erläutert. Hierbei zeigen:
- FIG 1: einen Querschnitt durch ein Generatorgehäuse,
- FIG 2: einen Längsschnitt durch das Generatorgehäuse,
- FIG 3: einen Querschnitt durch die Wellendichtung,
- FIG 4: eine schematische Schaltskizze einer radialen Dichtmittelüberwachung,
- FIG 5: eine schematische Schaltskizze einer radialen und einkanaligen axialen Dichtmittelüberwachung,
- FIG 6: eine vereinfachte Darstellung des Dichtrings mit Öleintrittsbohrungen,
- FIG 7: eine schematische Darstellung des Regelsystems des Ölkreislaufes.

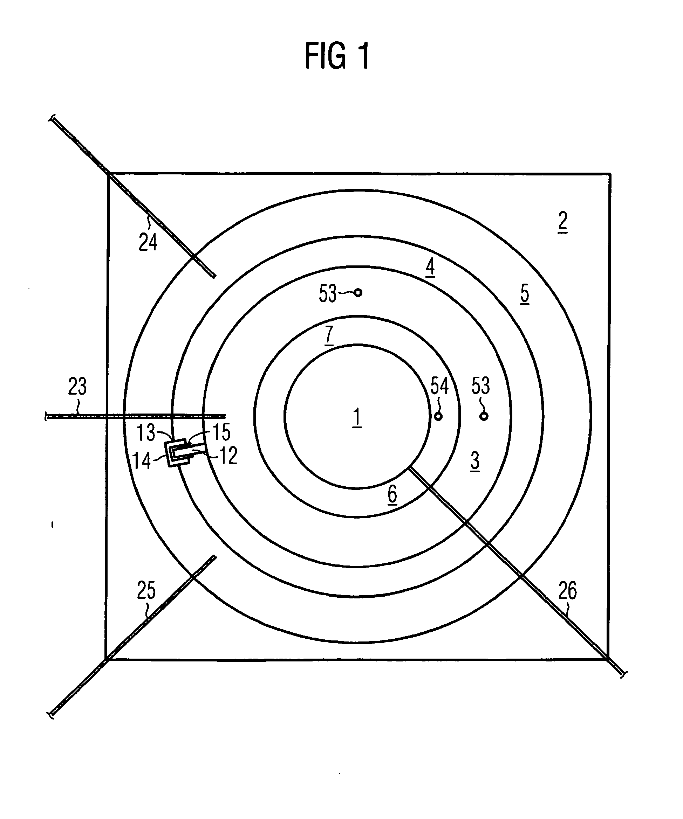

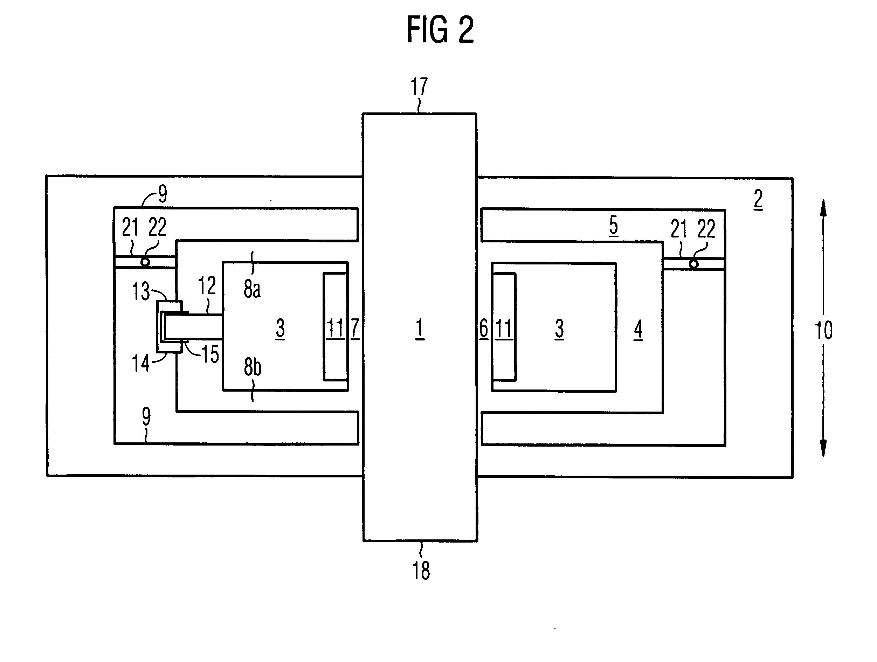

Wie in FIG 1 und FIG 2 dargestellt, verläuft die Läuferwelle 1 im Ständergehäuse 2, wobei sie von einem Dichtring 3 umgeben ist. Der Dichtring 3 ist in einer Kammer 4 des Dichtringhalters 5 angeordnet. Die eigentliche Abdichtung erfolgt dabei mit Öl 6, das in die Spalte 7 zwischen Dichtring 3 und Welle 1 (radialer Ölfilm) bzw. in die Spalte 8 zwischen Dichtring 3 und den Kammerwänden 9 des Dichtringhalters 5 (axialer Ölfilm) gedrückt wird. Das Dichtungssystem umfasst außerdem einen äußeren Ölkreislauf (nicht dargestellt) mit Pumpen, Filtern, Kühler sowie Behälter, Rohrleitungen und Ventilen.

Das Dichtungssystem ist derart ausgebildet, dass der Dichtring 3 durch den sich ausbildenden Ölfilm auf der Welle 1 schwimmt. Dabei ist die Dicke des Ölfilms in Abhängigkeit von den verschiedenen Umgebungsparametern über den Umfang unterschiedlich ausgebildet. Insbesondere kann es durch einen unregelmäßigen Ölfilm auch zu Bewegungen des Dichtringes 3 in axialer Richtung 10 kommen, da der Dichtring 3 im Dichtringhalter 5 auch in diese Richtung durch entsprechende Ölfilme gehalten wird.

Dichtring 3 und Dichtringhalter 5 sind aus Montagegründen geteilt ausgeführt. Der Dichtring 3 ist an seinen inneren Gleitflächen mit einem Weißmetallausguss 11 versehen. Der Innendurchmesser des Weißmetallausgusses 11 ist dabei nur wenig größer als der Wellendurchmesser.

Am Dichtring 3 ist ein Verdrehzapfen oder -bolzen 12 befestigt, der in eine Ausnehmung 13 des Dichtringhalters 5 ragt. Dadurch wird eine tangentiale Drehung des Dichtringes 3 nur im begrenzten Maße zugelassen, so dass sich der Dichtring 3 bei der Rotation der Welle 1 nicht mitdrehen kann. Die Aufnahmeausnehmung 13 ist nach Art einer durch Wände 14 begrenzten Aufnahmekammer ausgebildet.

Um erfindungsgemäß die elektrischen Widerstände der Ölfilme messen zu können, wird der Verdrehbolzen 12, der normalerweise elektrischen Kontakt zum Dichtringhalter 5 hat, durch eine Hülse 15 aus Kunststoff zum Dichtringhalter 5 isoliert. Die Isolierung kann auch durch einen aus Isolationsmaterial bestehenden Verdrehbolzen hergestellt werden. Weiterhin kann der elektrisch leitende Verdrehbolzen elektrisch isolierend in den Dichtring eingesetzt werden.

Der Dichtringhalter 5 wird zur Vermeidung von Wellenströmen über eine Isolierung 16 an das Gehäuse 2 angeschraubt. Zur Erfassung der elektrischen Widerstände der axialen Ölfilme in Richtung Turbinenseite 17 bzw. in Richtung Erregerseite 18 wird der Dichtringhalter 5 erfindungsgemäß axial zweigeteilt, wobei die beiden Hälften 19, 20 über eine Isolierung 21 gegenseitig elektrisch getrennt sind. Zwischen den Dichtringhaltern 19, 20 wird zur Ölabdichtung ein O-Ring 22 eingesetzt. Alternativ dazu ist es möglich, lediglich an einer inneren Dichtringhalterwand eine isoliert aufgesetzte Kontaktfläche vorzusehen, die Kontaktflächen können dabei auch in der Dichtringhalterwand integriert sein.

Um die elektrischen Widerstände der entsprechenden Ölfilme zu messen, werden Anschlussleitungen 23, 24, 25 installiert, wobei das Läuferpotential von der Läufererdungseinrichtung 26 auf der Turbinenseite des Generatorläufers abgegriffen wird.

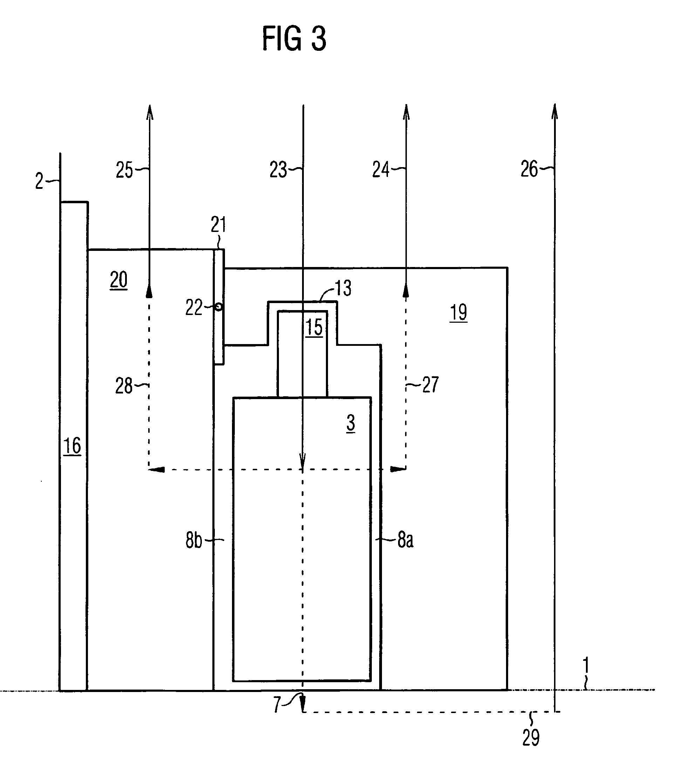

Wie insbesondere in FIG 3 dargestellt, ergeben sich durch die Installation der Anschlussleitungen 23, 24, 25 verschiedene elektrische Bahnen für die Widerstandsmessungen.

So erfolgt eine ersten Widerstandsmessung zur Erfassung des elektrischen Widerstandes des ersten axialen Ölfilms 8a zwischen Dichtring 3 und dem ersten Dichtringhalterelement 19 über die elektrische Bahn 27 zwischen den Anschlussleitungen 23 und 24. Die Messung des elektrischen Widerstandes des zweiten axialen Ölfilms 8b zwischen Dichtring 3 und dem zweiten Dichtringhalterelement 20 erfolgt zwischen den Anschlussleitungen 23 und 25 über die elektrische Bahn 28.

Die Messung des elektrischen Widerstandes des radialen Ölfilms 7 zwischen Dichtring 3 und Welle 1 erfolgt schließlich über die Anschlussleitungen 23 und 26 über die elektrische Bahn 29.

Die Messung erfolgt dabei vorzugsweise mit einer geringen Gleichspannung, beispielsweise 5 Volt, um die Isolierfestigkeit des Ölfilms durch die angelegte Spannung möglichst gering zu belasten. Von Vorteil ist es weiterhin, wenn die Gleichspannungsversorgungseinrichtung zum Läuferwellen/Erdpotential nur einpolig ist. Das Pluspotential wird über die Anschlussleitung 23 dem Dichtring 3 zugeführt. Zweckmäßig ist es, für die Messeinrichtungen der Dichtringe auf Erregerseite 18 und Turbinenseite 17 galvanisch getrennte Stromversorgungen zu verwenden.

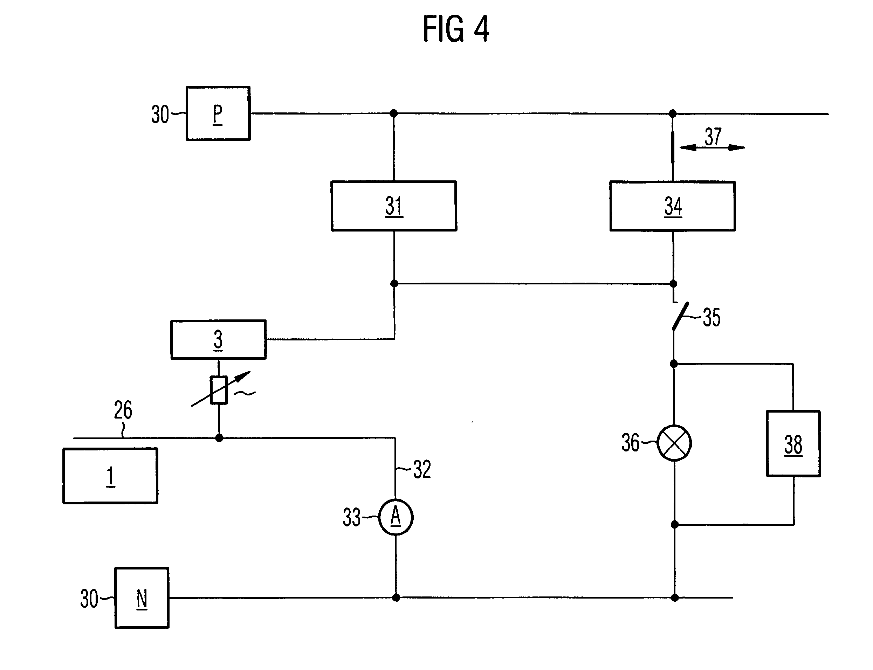

In FIG 4 ist das Prinzip einer einfachen Überwachungsschaltung dargestellt, die lediglich den radialen Ölfilm 7 überwacht. Von einer Spannungsquelle 30 wird das Pluspotential über das Relais 31 über Messleitungen dauerhaft am Dichtring 3 angelegt. Von der Läufererdungsbürste 26 wird mit der Messleitung 32 über ein Amperemeter 33 die Verbindung zum Minusanschluss der Spannungsquelle 30 hergestellt. Der mögliche Messstrom wird in diesem Fall durch den Widerstand des Relais 31 begrenzt, beispielsweise auf ca. 20 mA. Grundsätzlich ist eine Strombegrenzung und/oder eine Absicherung im Messkreis vorgesehen, um bei Störungen des Ölfilms keine Strommarkierungen zu erzeugen.

Der Kontakt des Relais 31 steht für einen separaten Meldekreis zur Verfügung. Wird der Ölfilm 7 elektrisch überbrückt, dann ziehen die Relais 31 und 34 an. Über Kontakt 35 geht das Relais 34 in Selbsthaltung, die als Signalmelder angeschlossene Leuchtdiode 36 leuchtet. Vorteilhafterweise wird die Spannung über der Diode, die ein Abbild der Isolierung des Ölfilms ist, kontinuierlich mit einem Aufzeichnungsgerät 38 registriert.

Über den Taster 37 kann die Selbsthaltung von Relais 34 aufgehoben werden, wenn der Ölfilm wieder isoliert. Bleibt das Relais 34 in Selbsthaltung, und ändert sich der Widerstand über den Ölfilm, dann verschiebt sich das Potential an der Diode 36 und diese beginnt zu flackern.

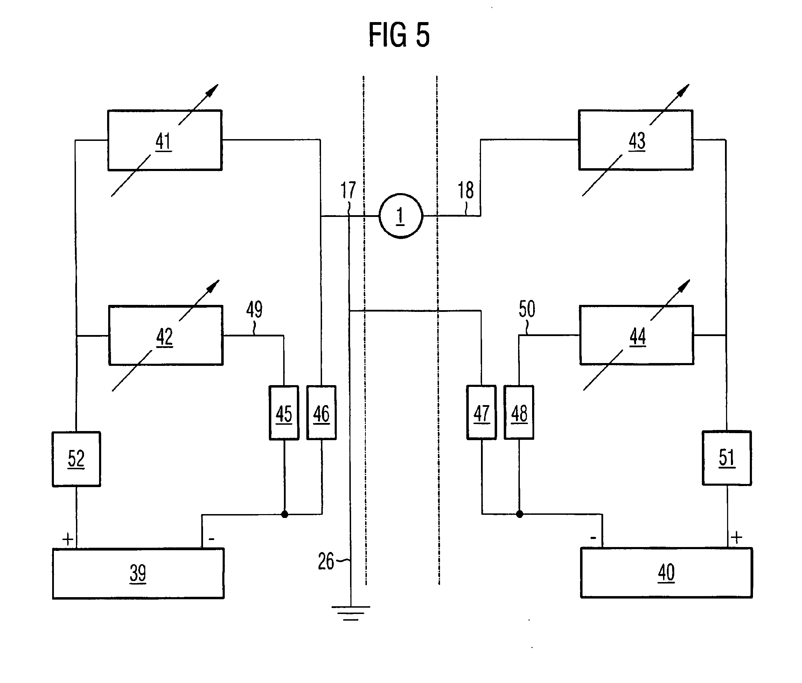

In FIG 5 wird das Prinzipschaltbild einer radialen und einkanaligen Ölfilmüberwachung für erreger- und turbinenseitige Dichtringe gezeigt. Soll eine zweikanalige axiale Ölfilmüberwachung durchgeführt werden, wie sie beispielsweise in FIG 3 durch die Ölfilmstrecken 27 und 28 dargestellt ist, so wird ein weiterer Messkreis am zweiten isolierten Dichtringhalterelement benötigt.

Die Stromversorgungen von Primär- und Sekundärseite sind voneinander galvanisch getrennt. Die Ölfilme in radialer und axialer Richtung sind durch die Widerstände 41, 42, 43, 44 dargestellt. Die Strommessung erfolgt in den Strommesseinrichtungen 45. Es können Shunts und elektronisch messende Messsysteme eingesetzt werden. Die Geheratorwelle 1 ist auf der Turbinenseite 17 über die Läufererdung 26 mit dem Erdpotential verbunden. Von diesem Wellenabgriff gehen Messleitungen zu den Strommesseinrichtungen 46, 47, die die radialen Ölfilme 7 überwachen. Zur Überwachung der axialen Ölfilme 8 werden von den isolierten Dichtringhaltern die Messleitungen 49, 50 zu den Strommesseinrichtungen 45, 48 geführt.

Solange der Generator nicht erregt ist, wird sich zwischen den Punkten 17 und 18 keine Wellenspannung aufbauen. Wenn der Generator erregt ist, dann liegt zwischen den Punkten 17 und 18 eine Wellenwechselspannung an, die über den erregerseitigen Messkreis einen Strom treiben kann, sofern die Ölfilme nicht mehr isolieren.

Der Strom wird durch die eingebauten Widerstände begrenzt, beispielsweise auf 20 mA. Um mit der angelegten Gleichspannung aus der Stromversorgung keine Überlagerung zu erhalten, blockt ein Tiefpassfilter 51 die Wechselspannung ab. Auch eine Ableitung über Kondensatoren wäre hier möglich. Eine andere Möglichkeit ist es, die Wellenwechselspannung als Messspannung zu verwenden, und die benötigte Gleichspannung nur zur Überwachung bei nicht erregter Maschine zuzuschalten.

Der Messkreis kann derart ausgestaltet sein, dass er mit oder ohne überlagerter Wellenspannung misst. In der turbinenseitigen Überwachung ist ebenfalls in Tiefpassfilter 52 installiert, da auch dort je nach räumlicher Anordnung der Wellendichtung und der Qualität der Läufererdung eine Wellenspannung anstehen kann. Aufgrund der Wellenspannung sind die erregerseitigen Messleitungen und Messsysteme gegenüber dem Erdpotential isoliert.

Wellenschwingungen, die ebenfalls Ursache für Störungen des Dichtungssystems sind, werden mit Hilfe von entsprechenden Sensoren, beispielsweise von im Dichtring 3 angeordneten Beschleunigungssensoren erfasst. Um die Bahnbewegung der Wellenschwingung zu ermitteln, werden dabei zwei Sensoren 53 in Umfangsrichtung um 90° versetzt zueinander angeordnet. Zur Bestimmung der Winkellage und zur Synchronisation der Sensoren mit anderen Sensoren im Dichtungssystem wird das Signal eines Wellenpositionsgebers 54 verwendet. Die gemessenen Werte werden mit einem Wellenimpuls synchronisiert und in Bezug zur Wellenschwingung, die in der Nähe der Wellendichtung erfasst wird, gebracht. Aus den vorliegenden Daten wird in einer entsprechenden Auswerteeinheit ein Zusammenhang zwischen Wellenschwingung, Verformung des Dichtringes, Ringpendelungen, Anstreifen des Dichtringes an der Welle usw. ermittelt. Die Daten werden für eine Schadensanalyse oder zur Verwendung in einem Diagnosesystem gespeichert. Sämtliche Messsignale werden einer rechnergestützten Auswerteeinheit zugeführt und dort unter Verwendung eines Rechnerprogramms verarbeitet.

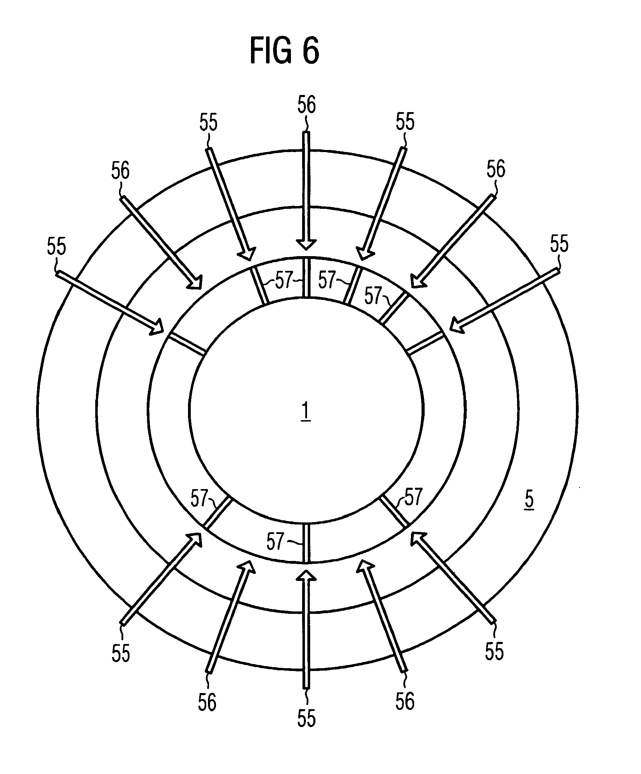

Für regelungstechnische Eingriffe sind zu den bereits vorhandenen Standardöleintritten 55 mindestens sechs zusätzliche Öleintritte 56 im Dichtringhalter 5 angeordnet. Eine derartige Anordnung ist in FIG 6 abgebildet. Die Zusatzeintritte 56 sind in Abhängigkeit von der Drehrichtung der Welle 1 und dem Bereich mit kleineren Ölfilmdicken unsymmetrisch positioniert. In Abhängigkeit von der räumlichen Lage einer Störung wird über die Öleintritte 55, 56 zusätzliches Dichtöl in die Radialbohrungen 57 des Dichtrings 3 gedrückt. Dies ist vorteilhafterweise immer dann der Fall, wenn der Ölfilm zu dünn oder überhaupt nicht mehr vorhanden ist. Für eine gezieltere Zuführung des zusätzlichen Dichtöls sind die Bohrungen im Dichtringhalter 5 mit Verlängerungsrohren versehen, die wenig oberhalb der Eintrittsbohrungen des Dichtrings 3 enden.

Durch das Einbringen des zusätzlichen Dichtöls wird der fehlende Ölfilm wieder aufgebaut. Ist der Dichtring 3 über den Umfang, beispielsweise durch ungleichmäßige Wärmeabfuhr, elliptisch verformt, bildet sich in der kleineren Durchmesserachse der Ellipse ein dünnerer Ölfilm aus. Eine zusätzliche Ölmenge führt in diesem Bereich die Wärme besser ab, so dass die Dichtringverformung zurückgeht und der Ölfilm wieder zunimmt.

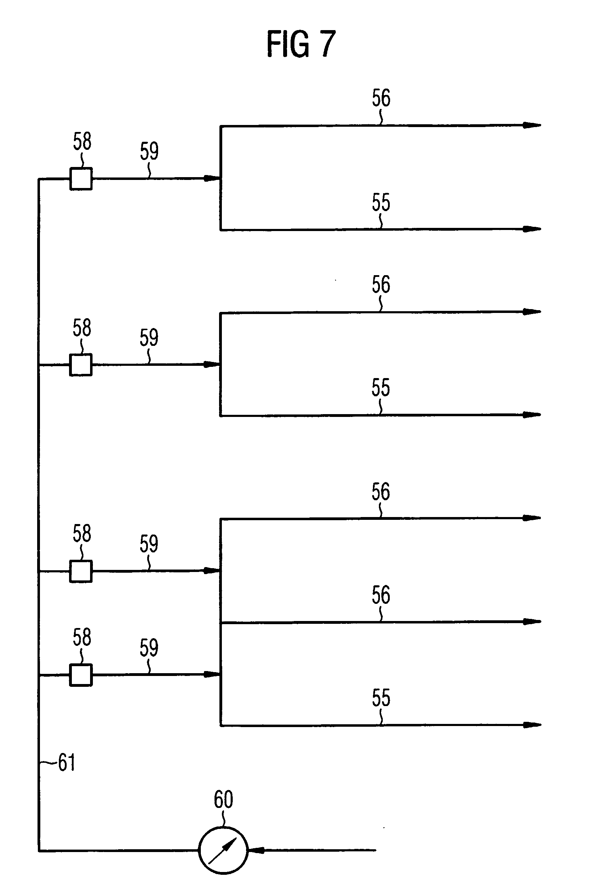

Wie in FIG 7 dargestellt, werden die Zusatzölmengen entsprechend des Regelverhaltens beispielsweise bei einer Zweipunktregelung nur zeitlich begrenzt zugeführt. Die Steuerung kann durch Magnetventile 58 in den Zulaufleitungen 59 oder auch durch Stellventile erfolgen. Welche Ventile für wie lange betätigt werden wird über einen programmierbaren Reglerbaustein 60 gesteuert. Im Reglerbaustein 60 werden unter Verwendung der Messgrößen die entsprechenden Stellorgane betätigt.

Zur Vereinfachung des Regelsystems können die Zusatzrohrleitungen 59 auf mehrere Öleintritte 55, 56 gemeinsam geschaltet werden. Das zusätzliche Dichtöl wird aus der Dichtölanlage über die Rohrleitung 61 den Ventilen 58 zugeführt. Vorteilhafterweise liegt der Öldruck in dieser Leitung etwas über dem Öldruck der Standardölversorgung.

Wird das Zusatzöl über einen separaten Kühler geleitet, dann kann der Regelkreis den Einfluss des kälteren Zusatzöls bei der Störungsbehebung berücksichtigen.

Entsprechend diesem Regelungsverfahren können auch Störungen im axialen Ölfilm zwischen Dichtring 3 und Dichtringhalter 5 ausgeglichen werden.

### Bezugszeichenliste

- 1: Läuferwelle
- 2: Ständergehäuse
- 3: Dichtring
- 4: Kammer
- 5: Dichtringhalter
- 6: Dichtöl
- 7: radiale Spalte
- 8: axiale Spalte
- 9: Kammerwand
- 10: axiale Dichtung
- 11: Weißmetallausguss
- 12: Verdrehbolzen
- 13: Aufnahmeausnehmung
- 14: Wand
- 15: Hülse
- 16: Isolierung
- 17: Turbinenseite
- 18: Erregerseite
- 19: Dichtringhalterelement
- 20: Dichtringhalterelement
- 21: Dichtringhalterisolierung
- 22: O-Ring
- 23: Anschlussleitung
- 24: Anschlussleitung
- 25: Anschlussleitung
- 26: Läufererdungsbürste
- 27: erste elektrische Bahn
- 28: zweite elektrische Bahn
- 29: dritte elektrische Bahn
- 30: Spannungsquelle
- 31: Relais
- 32: Messleitung
- 33: Amperemeter
- 34: Relais
- 35: Kontakt
- 36: LED
- 37: Taster
- 38: Aufzeichnungsgerät
- 39: Stromversorgung
- 40: Stromversorgung
- 41: Widerstand
- 42: Widerstand
- 43: Widerstand
- 44: Widerstand
- 45: Strommesser
- 46: Strommesser
- 47: Strommesser
- 48: Strommesser
- 49: Messleitung
- 50: Messleitung
- 51: Tiefpassfilter
- 52: Tiefpassfilter
- 53: Beschleunigungssensor
- 54: Wellenpositionsgeber
- 55: Standardöleintritt
- 56: Zusatzöleintritt
- 57: Radialbohrung
- 58: Magnetventil
- 59: Zulaufleitung
- 60: Reglerbaustein
- 61: Rohrleitung

## Patentansprüche

1. Dichtungssystem für wasserstoffgekühlte Turbogeneratoren, mit einer die Läuferwelle (1) umschließenden, einen Dichtring (3) aufweisenden Wellendichtung und einem Dichtmittel (6),
**gekennzeichnet durch**
ein Messsystem zur Erfassung des elektrischen Widerstandes des Dichtmittels (6).

2. Dichtungssystem nach Anspruch 1,
**gekennzeichnet durch**
einen den Dichtring (3) haltenden Dichtringhalter (5) und Messvorrichtungen (23, 24, 25) zur Erfassung des elektrischen Widerstandes des axial zwischen Dichtring (3) und Dichtringhalter (5) angeordneten Dichtmittels.

3. Dichtungssystem nach Anspruch 2,
**dadurch gekennzeichnet, dass**
der Dichtringhalter (5) axial zweigeteilt ist und die beiden Teile (19, 20) des Dichtringhalters ineinander isoliert sind.

4. Dichtungssystem nach Anspruch 2 oder 3,
**gekennzeichnet durch**
ein am Dichtring (3) angebrachtes, in einer Aufnahmeausnehmung (13) des Dichtringhalters (5) ragendes Verdrehelement (12), das zum Dichtringhalter (5) elektrisch isoliert ist.

5. Dichtungssystem nach Anspruch 4,
**dadurch gekennzeichnet, dass**
das Verdrehelement (12) aus einem Isolationsmaterial besteht.

6. Dichtungssystem nach Anspruch 4,
**gekennzeichnet durch**
ein am Verdrehelement (12) und/oder am Dichtringhalter (5) angeordnetes Isolierelement, das das Verdrehelement (12) gegen den Dichtringhalter (5) isoliert.

7. Dichtungssystem nach einem der Ansprüche 2 bis 6,
**dadurch gekennzeichnet, dass**
die Messvorrichtungen (23, 24, 25) sowohl am Dichtring (3) als auch an einem oder beiden der beiden Teile (19, 20)des Dichtringhalters (5) angebracht sind.

8. Dichtungssystem nach einem der Ansprüche 2 bis 7,
**gekennzeichnet durch**
Messvorrichtungen (23, 26) zur Erfassung des elektrischen Widerstandes des radial zwischen Welle (1) und Dichtring (3) angeordneten Dichtmittels (6).

9. Dichtungssystem nach Anspruch 8,
**dadurch gekennzeichnet, dass**
die Messvorrichtungen am Dichtring (3) und an der Läufererdungsvorrichtung (26) angebracht sind.

10. Verfahren zum Betrieb eines Dichtungssystems nach einem der Ansprüche 1 bis 9, mit den Schritten
- Erfassen des elektrischen Widerstandes des Dichtmittels,
- Auswerten der Messsignale und
- Überwachen des Dichtungssystems.

11. Verfahren nach Anspruch 10,
**gekennzeichnet durch**
das Erfassen des elektrischen Widerstandes des axial zwischen Dichtring (3) und Dichtringhalter (5) angeordneten Dichtmittels (6).

12. Verfahren nach Anspruch 10 oder 11,
**gekennzeichnet durch**
das Erfassen des elektrischen Widerstandes des radial zwischen Welle (1) und Dichtring (3) angeordneten Dichtmittels (6).

13. Verfahren nach einem der Ansprüche 10 bis 12,
**gekennzeichnet durch**
das Speichern und/oder Auswerten der Messsignale.

14. Verfahren nach einem der Ansprüche 10 bis 13,
**gekennzeichnet durch**
regelungstechnisches Eingreifen in das Dichtungssystem, um Störungen während des Betriebes zu vermeiden.

15. Verfahren nach Anspruch 14,
**gekennzeichnet durch**
Regeln der Dichtmittelzufuhr in Abhängigkeit von den Meßgrößen.

## Claims

1. Sealing system for hydrogen-cooled turbogenerators, with a shaft seal surrounding the rotor shaft (1) and having a sealing ring (3) and with a sealing means (6), **characterized by** a measurement system for detecting the electrical resistance of the sealing means (6).

2. Sealing system according to Claim 1, **characterized by** a sealing-ring holder (5) holding the sealing ring (3) and by measurement devices (23, 24, 25) for detecting the electrical resistance of the sealing means arranged axially between the sealing ring (3) and sealing-ring holder (5).

3. Sealing system according to Claim 2, **characterized in that** the sealing-ring holder (5) is divided in two axially and the two parts (19, 20) of the sealing-ring holder are insulated one in the other.

4. Sealing system according to Claim 2 or 3, **characterized by** a rotary element (12) which is attached to the sealing ring (3) and projects in reception recess (13) of the sealing-ring holder (5) which is insulated electrically with respect to the sealing-ring holder (5).

5. Sealing system according to Claim 4, **characterized in that** the rotary element (12) consists of an insulation material.

6. Sealing system according to Claim 4, **characterized by** an insulating element which is arranged on the rotary element (12) and/or on the sealing-ring holder (5) and which insulates the rotary element (12) with respect to the sealing-ring holder (5).

7. Sealing system according to one of Claims 2 to 6, **characterized in that** the measurement devices (23, 24, 25) are attached both to the sealing ring (3) and to one or both of the two parts (19, 20) of the sealing-ring holder (5).

8. Sealing system according to one of Claims 2 to 7, **characterized by** measurement devices (23, 26) for detecting the electrical resistance of the sealing means (6) arranged radially between the shaft (1) and sealing ring (3).

9. Sealing system according to Claim 8, **characterized in that** the measurement devices are attached to the sealing ring (3) and to the rotor earthing device (26).

10. Method for operating a sealing system according to one of Claims 1 to 9, with the steps
- detection of the electrical resistance of the sealing means,
- evaluation of the measurement signals and
- monitoring of the sealing system.

11. Method according to Claim 10, **characterized by** the detection of the electrical resistance of the sealing means (6) arranged axially between the sealing ring (3) and sealing-ring holder (5).

12. Method according to Claim 10 or 11, **characterized by** the detection of the electrical resistance of the sealing means (6) arranged radially between the shaft (1) and sealing ring (3).

13. Method according to one of Claims 10 to 12, **characterized by** the storing and/or evaluation of the measurement signals.

14. Method according to one of Claims 10 to 13, **characterized by** controlling intervention in the sealing system in order to avoid faults during operation.

15. Method according to Claim 14, **characterized by** the control of the supply of sealing means as a function of the measured quantities.

## Revendications

1. Système d'étanchéité, notamment pour des turbogénératrices à refroidissement par l'hydrogène, comprenant une étanchéité d'arbre entourant l'arbre ( 1 ) rotorique et ayant un anneau ( 3 ) d'étanchéité et un agent ( 6 ) d'étanchéité,
**caractérisé par**
un système de mesure pour la détection de la résistance électrique de l'agent ( 6 ) d'étanchéité.

2. Système d'étanchéité suivant la revendication 1,
**caractérisé par**
un porte-anneau ( 5 ) d'étanchéité maintenant l'anneau ( 3 ) d'étanchéité et des dispositifs ( 23, 24, 25 ) de mesure, pour la détection de la résistance électrique de l'agent d'étanchéité, disposés axialement entre l'anneau ( 3 ) d'étanchéité et le porte-anneau ( 5 ) d'étanchéité.

3. Système d'étanchéité suivant la revendication 2,
**caractérisé en ce que**
le porte-anneau ( 5 ) d'étanchéité est subdivisé axialement en deux et les deux parties ( 19, 20 ) du porte-anneau d'étanchéité sont isolées l'une dans l'autre.

4. Système d'étanchéité suivant la revendication 2 ou 3,
**caractérisé par**
un élément ( 12 ) de torsion, qui est mis sur l'anneau ( 3 ) d'étanchéité, qui pénètre dans un évidement ( 13 ) de réception du porte-anneau ( 5 ) d'étanchéité et qui est isolé électriquement par rapport au porte-anneau ( 5 ) d'étanchéité.

5. Système d'étanchéité suivant la revendication 4,
**caractérisé en ce que**
l'élément ( 12 ) de torsion est en un matériau isolant.

6. Système d'étanchéité suivant la revendication 4,
**caractérisé par**
un élément isolant, qui est disposé sur l'élément ( 12 ) de torsion et/ou sur le porte-anneau ( 5 ) d'étanchéité et qui isole l'élément ( 12 ) de torsion du porte-anneau ( 5 ) d'étanchéité.

7. Système d'étanchéité suivant l'une des revendications 2 à 6,
**caractérisé en ce que**
les dispositifs ( 23, 24, 25 ) de mesure sont mis à la fois sur l'anneau ( 3 ) d'étanchéité et sur l'une ou les deux parties ( 19, 20 ) du porte-anneau ( 5 ) d'étanchéité.

8. Système d'étanchéité suivant l'une des revendications 2 à 7,
**caractérisé par**
des dispositifs ( 23, 26 ) de mesure, pour la détection de la résistance électrique de l'agent ( 6 ) d'étanchéité, disposés radialement entre l'arbre ( 1 ) et l'anneau ( 3 ) d'étanchéité.

9. Système d'étanchéité suivant la revendication 8,
**caractérisé en ce que**
les dispositifs de mesure sont mis sur l'anneau ( 3 ) d'étanchéité et sur le dispositif ( 26 ) de suspension du rotor.

10. Procédé pour faire fonctionner un système d'étanchéité suivant l'une des revendications 1 à 9, comprenant les stades
- détection de la résistance électrique de l'agent d'étanchéité,
- exploitation des signaux de mesure et
- contrôle du système d'étanchéité.

11. Procédé suivant la revendication 10,
**caractérisé par**
la détection de la résistance électrique de l'agent ( 6 ) d'étanchéité disposé axialement entre l'anneau ( 3 ) d'étanchéité et le porte-anneau ( 5 ) d'étanchéité.

12. Procédé suivant la revendication 10 ou 11,
**caractérisé par**
la détection de la résistance électrique de l'agent ( 6 ) d'étanchéité disposé radialement entre l'arbre ( 1 ) et l'anneau ( 3 ) d'étanchéité.

13. Procédé suivant l'une des revendications 10 à 12,
**caractérisé par**
la mémorisation et/ou l'exploitation des signaux de mesure.

14. Procédé suivant l'une des revendications 10 à 13,
**caractérisé par**
l'intervention en technique de régulation dans le système d'étanchéité, pour éviter des perturbations pendant le fonctionnement.

15. Procédé suivant la revendication 14,
**caractérisé par**
la régulation de l'apport de l'agent d'étanchéité en fonction des grandeurs mesurées.
